# EUROPÄISCHE PATENTANMELDUNG

(11) **EP 2 457 775 A1**
(43) Veröffentlichungstag der Anmeldung: **30.05.2012**
(21) Anmeldenummer: 11008189.0
(22) Anmeldetag: 11.10.2011
(51) Int. Cl.: B60R 7/00

(54) **Mittelbox**

(30) Priorität: 26.11.2010 DE 102010052490
(71) Anmelder: KAMEI automotive GmbH, 38448 Wolfsburg (DE)
(72) Erfinder: Schulze, Dirk, 29378 Wittingen (DE)
(74) Vertreter: Friedrich, Andreas

(57) **Zusammenfassung**

Mittelbox (1) zum Anordnen zwischen einem Fahrersitz und einem Beifahrersitz eines Nutzfahrzeugs mit einer Unterschale (2) zum Befestigen an einem Fahrzeugboden, dem Fahrersitz oder dem Beifahrersitz und einer an der Unterschale (2) angeordneten Oberschale (4), wobei die Unterschale (2) und die Oberschale (4) gemeinsam einen Stauraum zum Aufnehmen von Gegenständen, beispielsweise einem Laptop, umschließen, wobei die Oberschale (4) an einer der Unterschale (2) abgewandten Seite (8) wenigstens eine Öffnung (10) zum Stauraum und wenigstens einen Schacht (16) zur Aufnahme wenigstens eines Bediengerätes aufweist.

## Beschreibung

Die Erfindung betrifft eine Mittelbox zum Anordnen zwischen einem Fahrersitz und einem Beifahrersitz eines Nutzfahrzeugs.

Viele Nutzfahrzeuge, beispielsweise von der Größe eines kleinen Busses oder eines kleinen Transporters, müssen, nachdem sie das Werk des Herstellers verlassen haben, für den jeweiligen Kunden individuell ausgerüstet und ausgebaut werden. Die jeweilige Ausstattung des Fahrzeuges ist dabei für jeden Kunden unterschiedlich und individuell konzeptionierbar. Insbesondere Einsatzfahrzeuge, beispielsweise von Polizei und Feuerwehr, aber auch Baustellenfahrzeuge und andere, beispielsweise von kleinen Handwerkerfirmen genutzte Fahrzeuge, verfügen dabei über eine Mehrzahl zusätzlicher elektronischer Geräte. Dies sind beispielsweise Sondersignale, wie Blaulicht und Martinshorn oder gelbe Warnleuchten, Funk- und Telekommunikationsgeräte, Anzeigetafeln und, beispielsweise bei Polizeifahrzeugen, Geschwindigkeitsmessgeräte und Videoaufzeichnungsgeräte.

Nutzfahrzeuge sind dabei insbesondere die Fahrzeuge der Klassen M2, M3, N1, N2 und N3 gemäß der Richtlinie 70/156/EWG der Europäischen Gemeinschaft von 1970.

Aus der DE 10 2005 003 877 A1 ist ein Mittelkonsolensystem bekannt, das in Pkw eingesetzt werden kann. Diese unterscheiden sich oftmals lediglich in einigen Komponenten, während der Grundaufbau derselbe ist. Für diesen einen Grundaufbau wird in modularer Bauweise ein Mittelkonsolensystem vorgestellt, das an die jeweiligen Wünsche und Bedürfnisse der Fahrzeugnutzer anpassbar ist. Aufgrund der sehr unterschiedlichen Anforderungsprofile zwischen Pkw und Nutzfahrzeugen ist die dort beschriebene Ausgestaltung für Nutzfahrzeuge jedoch nicht einsetzbar.

Hinzu kommt eine Vielzahl an Werkzeugen und Gegenständen, die möglichst gut erreichbar von den im Fahrzeug sitzenden Personen mitgeführt werden müssen. Beispielhaft seien hier Polizeikellen, Warnwesten oder dergleichen genannt. Sicherheitskräfte müssen zudem insbesondere in Gefahrensituationen schnellen Zugriff auf mitgeführte Waffen haben. Die genannte Ausstattung muss in der Fahrgastzelle des Kraftfahrzeuges untergebracht werden, wobei unterschiedliche Gegenstände und Geräte völlig unterschiedliche Anforderungen an ihre Anordnung stellen. Bediengeräte, beispielsweise Funkgeräte, müssen so angeordnet sein, dass ihre Bedienelemente, beispielsweise Druck-, Dreh- oder Kippschalter, Poti, Taster oder sonstige Bedienhebel, von den Insassen des Fahrzeuges schnell und leicht erreichbar sind. Dazu werden diese Geräte heute zumeist in das Armaturenbrett des Kraftfahrzeuges oder die Mittelkonsole integriert. Da dort jedoch auch vom Hersteller in das Fahrzeug eingebaute Geräte angeordnet sind, wie beispielsweise eine Klimaanlage und ein Radio, ist der dort vorhandene Platz begrenzt. Zudem wird durch die große Anzahl der verschiedenen Bedienelemente der verschiedenen Funktionsgeräte das Cockpit unübersichtlich, wodurch die Gefahr von Fehlbedienungen steigt. Zudem muss sich vorher überlegt werden, welche Geräte vom Fahrer und welche von einem gegebenenfalls mitfahrenden Beifahrer bedient werden sollen. Als Beispiel seien hier Geschwindigkeitsmessgeräte und Videokameras in Polizeifahrzeugen genannt, die während der Fahrt vom Beifahrer bedient werden müssen. Diese Geräte müssen folglich so in die Mittelkonsole eingebaut werden, dass der Beifahrer sicheren und einfachen Zugriff auf die zugehörigen Bedienelemente hat. Die sich vor dem Beifahrer befindliche Konsole ist jedoch mit Handschuhfach und gegebenenfalls mehreren Airbags versehen, so dass auch hier der zur Verfügung stehende Platz begrenzt ist.

Aus der Not heraus werden daher verschiedene Geräte oder nur dafür angefertigte Leisten mit den für diese Geräte notwendigen Bedienelementen auf dem Armaturenbrett bzw. der Mittelkonsole und damit im Sichtbereich des Fahrers des Kraftfahrzeugs angeordnet. Dadurch wird zum einen die Bedienbarkeit erschwert und zum anderen der Sichtbereich des Fahrers eingeschränkt und seine Aufmerksamkeit gegebenenfalls abgelenkt.

Zusätzlicher Stauraum für gegebenenfalls mitzuführende Werkzeuge oder benötigtes Zubehör, wie beispielsweise Warnwesten, Unterlagen und Formulare, und bei Einsatzkräften beispielsweise Polizeikellen oder Waffen, ist im Inneren eines Kraftfahrzeuges knapp. Diese werden beispielsweise in in der Tür vorgesehene Seitenfächern im Kraftfahrzeug mitgeführt. Nachteilig ist jedoch, dass zum einen der Platz zwischen einer im Fahrzeug sitzenden Person und ihrer Tür sehr gering ist, so dass man an Dinge, die in diesen Türfächern verstaut sind, nur schlecht herankommt, und dass zum anderen die Gefahr besteht, dass in den Seitentüren verstaute Gegenstände beim Öffnen und Schließen der Fahrzeugtüren verloren gehen können. Zudem sind sie leicht zu stehlen, insbesondere, wenn Fahrzeuge im Einsatz oder auf Baustellen nicht abgeschlossen abgestellt werden.

Weitere Staumöglichkeiten befinden sich oberhalb der Windschutzscheibe, wo beispielsweise das Führerhaus oder die Fahrzeugkabine erhöht ausgestaltet werden kann, so dass ein Zwischenboden eingezogen werden kann. An in derartigen Fächern verstaute Gegenstände kommt man jedoch insbesondere während der Fahrt nur sehr schlecht oder gar nicht heran. Zudem können sie bei heftigen Fahrmanövern, beispielsweise Bremsen oder scharfen Kurven, durcheinander geraten und innerhalb dieser Fächer verrutschen.

Insbesondere wenn teure Spezialausrüstung oder beispielsweise ein Laptop mitgeführte werden muss, sind die genannten Staumöglichkeiten nur sehr bedingt geeignet, diese Gegenstände aufzunehmen.

Dadurch, dass durch das begrenzte Platzangebot verschiedene Bediengeräte an verschiedenen Orten innerhalb des Kraftfahrzeuges angeordnet werden, müssen für die verschiedenen Bediengeräte nötige Kabel an jeden dieser Orte gezogen werden. Dies ist, da es nicht vom Fahrzeughersteller, sondern vom Ausstatter des Kraftfahrzeuges durchgeführt werden muss, aufwändig und kosten- und zeitintensiv.

Der Erfindung liegt daher die Aufgabe zugrunde, eine Mittelbox vorzuschlagen, mit der verschiedene Bediengeräte und Sonderausstattung und Zubehör sowie mitzuführende Gegenstände wie beispielsweise ein Laptop einfach, sicher und leicht zugänglich im Inneren eines Nutzfahrzeugs angeordnet werden können.

Die Erfindung löst die gestellte Aufgabe durch eine Mittelbox zum Anordnen zwischen einem Fahrersitz und einem Beifahrersitz eines Nutzfahrzeugs mit einer Unterschale zum Befestigen an einem Fahrzeugboden, dem Fahrersitz oder dem Beifahrersitz und einer an der Unterschale angeordneten Oberschale, wobei die Unterschale und die Oberschale gemeinsam einen Stauraum zum Aufnehmen von Gegenständen, beispielsweise einem Laptop, umschließen, wobei die Oberschale an einer der Unterschale abgewandten Seite wenigstens eine Öffnung zum Stauraum und wenigstens einen Schacht zur Aufnahme wenigstens eines Bediengerätes aufweist.

Ein Schacht kann dabei insbesondere ein Schacht gemäß der Norm ISO 7736 zur Aufnahme von Bediengeräten im Fahrzeuginnenraum sein.

Durch eine erfindungsgemäße Mittelbox wird Stauraum sowohl für mitzuführendes Zubehör und Werkzeug oder Papiere als auch eine Aufnahmemöglichkeit für wenigstens ein, vorteilhafterweise mehrere Bediengeräte zur Verfügung gestellt. Als Bediengeräte kommen beispielsweise Funkgeräte, Radios oder Multimediageräte oder Bedienzeilen für Sonderausstattung, beispielsweise Sondersignale oder Anzeigetafeln, in Frage. Durch die Zweiteiligkeit der Mittelbox mit einer Unterschale und einer daran angeordneten Oberschale ist eine leichte Zugänglichkeit beim Ein- und Ausbau der Mittelbox in ein Kraftfahrzeug gegeben. Zudem können Ober- und Unterschale separat geformt und ausgebaut werden, um auf Kundenwünsche flexibel und individuell eingehen zu können. Im Stauraum können elektronische Geräte, Waffen oder mitzuführende Sonderausstattung und Werkzeuge verstaut werden, es kann aber beispielsweise auch eine Versorgungselektronik angeordnet sein.

Als besonders vorteilhaft hat sich herausgestellt, wenn die Mittelbox aus einem hochwertigen Kunststoff besteht und die Anforderungen an Optik, Haptik und die von der Automobilindustrie gewünschten Radien der Ecken und Kanten, die insbesondere für die Sicherheit der Insassen im Falle eines Unfalles wichtig sind, erfüllt werden. Durch die Ausgestaltung aus einem hochwertigen Kunststoff wird eine gute und hohe Stabilität der Mittelbox bei gleichzeitig geringem Gewicht erreicht. Ein hochwertiger Kunststoff zeichnet sich dabei durch gute Werte im Elastizitätsmodul, im Zug-Elastizitätsmodul, der Schlagzähigkeit nach Charpy oder der ViCat-Erweichungstemperatur aus. Vorzugsweise ist der Kunststoff IMDS-systemfähig, wobei IMDS das internationale Materialdatensystem bezeichnet. Besonders vorzugsweise erfüllt der Kunststoff die strengen Anforderungen der Automobil- und/oder Flugzeugindustrie und ist von diesen anerkannt.

Die Außenmaße der Mittelbox werden nur von den bereits im Fahrzeug von Seiten des Herstellers angeordneten Komponenten, wie beispielsweise Fahrersitz und Beifahrersitz oder Handbremse und Schaltknüppel bestimmt. Insbesondere kann der Stauraum so gewählt werden, dass auch großvolumige Bauteile und Geräte, wie beispielsweise Laptops oder Handfeuerwaffen, in dem Stauraum aufgenommen werden können. Zur Befestigung können insbesondere Schraubverbindungen vorgesehen sein, so dass die Mittelbox einfach in ein Fahrzeug ein und aus dem Fahrzeug ausgebaut werden kann. Auch dadurch wird die Flexibilität beispielsweise für Umrüstungen, Nachrüstungen oder Ausbauten gewährleistet und aufrechterhalten. Die Ausgestaltung eines Bodens der Unterschale und damit des Bodens der Mittelbox ist dabei an den jeweiligen Fahrzeugtyp, für den die Mittelbox konstruiert wird, angepasst, so dass hier eine optimale Passform erreicht wird.

Durch die Befestigung der Mittelbox an dem Fahrzeugboden oder dem Fahrer-oder dem Beifahrersitz des Kraftfahrzeuges wird zudem eine ausreichende Sicherheit auch in Unfallsituationen, wie beispielsweise einen Roll-Over, erreicht. Die Oberschale und die Unterschale können mittels Nieten oder Schrauben aneinander befestigt sein. Eine Befestigung durch Schrauben oder andere lösbare Befestigungsmittel erhöht die Service- und Wartungsfreundlichkeit der Mittelbox und macht einen einfachen Zugang und Zugriff auf den Inhalt der Mittelbox möglich. Dies ist insbesondere dann von Vorteil, wenn sich beispielsweise eine Versorgungselektronik in der Mittelbox befindet.

Vorteilhafterweise ist die Öffnung zum Stauraum, durch die Zugriff in den Stauraum gewährt wird, mit einem Deckel verschließbar. Dabei ist vorteilhafterweise wenigstens ein Gasdruckdämpfer zwischen dem Deckel und der Oberschale angeordnet, um ein versehentliches Zuschlagen eines offen stehenden Deckels zu verhindern. Wird der Stauraum nicht für Werkzeuge, Zubehör oder mitzuführende Gegenstände benötigt, sondern beispielsweise als Stauraum für Versorgungselektronik oder sonstige Anschlüsse, an die die Personen, die das Fahrzeug benutzen, nicht heran müssen, kann der Deckel auch beispielsweise über Schraubverbindungen an der Oberschale festgeschraubt werden. Durch einfaches Lösen dieser Schrauben ist weiterhin ein Zugang zu der Versorgungselektronik oder den sich in dem Stauraum der Mittelbox befindlichen Anlagen möglich.

Vorteilhafterweise ist der Deckel abschließbar. Damit entsteht im Kraftfahrzeug bei eingebauter Mittelbox ein Stauraum, in dem auch wertvolle oder sicherheitsrelevante Gegenstände, wie beispielsweise Laptops oder Waffen, auch bei unverschlossenem Fahrzeug sicher verstaut werden können, ohne dass die Erreichbarkeit durch die im Fahrzeug sitzenden Personen im Ernstfall reduziert wird.

Auf der Oberseite des Deckels, der der Oberschale abgewandt ist, können zusätzlich Hörerelemente von Funkgeräten oder Druck-, Dreh- und Kippschalter, Poti, Taster oder sonstige Bedienhebel aufgenommen werden. Dadurch wird eine gute Erreichbarkeit und Bedienbarkeit von verschiedenen Geräten, beispielsweise Rechnern, Funkgeräten, DVD-Playern oder anderen Multimedia-Geräten gesichert, die sich in der Mittelbox befinden können.

Vorteilhafterweise ist im Stauraum ein Trägerelement zum Abstützen von zu verstauenden Gegenständen angeordnet. Dies ist insbesondere dann von Vorteil, wenn die aufzunehmenden Gegenstände teuer sind und während der Fahrt, beispielsweise bei Brems- oder Kurvenmanövern, nicht in dem Stauraum kippen, rutschen und an die Seitenwände anschlagen sollen. Vorzugsweise ist das Trägerelement einstückig mit der Unterschale ausgebildet. Alternativ kann es auch als separates Bauteil, beispielsweise aus einem festen Kunststoff oder einem Metall, wie beispielsweise Aluminium, hergestellt sein. Dabei kann nicht nur die Form des Trägerteils individuell auf das aufzunehmende Gerät abgestimmt sein, sondern auch ein Lochbild im Trägerelement vorgesehen sein, um an bestimmten Stellen, die durch die Geometrie des aufzunehmenden Gerätes bestimmt werden, Kabel durch das Trägerelement zum aufgenommenen Gerät führen oder Befestigungselemente zum Befestigen und sicheren Aufbewahren des Geräts aufnehmen zu können. Die Trägerelemente und das Lochbild sind dabei nach Kundenwunsch individuell auf sämtliche im Stauraum aufzunehmenden Geräte anpassbar, so dass hier der Flexibilität lediglich durch die Außenmaße der Staubox, die, wie bereits gesagt, durch den im Fahrzeug zur Verfügung stehenden Raum begrenzt werden, Grenzen gesetzt sind. Auch die anzuordnenden bzw. aufzunehmenden Bedienelemente können in jedem vom Kunden individuell gewünschten Format eingesetzt und aufgenommen werden.

Die Unterschale dient dabei zum einen als Bodenelement für die Befestigung der Mittelbox am Fahrzeug und zudem für die Aufnahme des Trägerelementes im Inneren der Mittelbox. Das Trägerelement kann dabei beispielsweise aus Aluminium gefertigt und für die Aufnahme unterschiedlichster Geräte, beispielsweise Funkgeräte, Card-PC, Rechner, Elektronikgeräte, Audio- oder beispielsweise Waffen, wie Maschinenpistolen oder Handfeuerwaffen, ausgelegt sein.

Die Oberschale kann mit einer Anschlagmöglichkeit für den Deckel ausgestattet sein. Zudem sind an ihr die Scharniere und gegebenenfalls Gasdruckdämpfer für den Deckel angeordnet, so dass für den an der Oberschale angeordneten Deckel die Möglichkeit besteht, diesen durch Scharniere und Gasdruckdämpfer zu öffnen. Zudem kann an der Oberschale ein Schließsystem, wie es beispielsweise in der Patentanmeldung DE 10 2010 011 775.7 vorgesehen ist, angeordnet sein. Zusätzlich zu der Öffnung zum Stauraum können in der Oberschale beispielsweise drei DIN-Schächte oder die wahlweise Aufnahme für Bediengeräte und Funkgerätmodule, Radio, DVD-Geräte oder ähnliches vorgesehen sein oder deren Druck-, Dreh- und Kippschalter, Poti, Taster und sonstige Bedienhebel. Auch die Be- und Entlüftung kann in diesem Modul gesichert und die Versorgung beispielsweise von Lautsprechern gewährleistet sein.

Das im Stauraum angeordnete Trägerelement, beispielsweise aus Aluminium, ist für die Befestigung unterschiedlicher Geräte und/oder einer Versorgungselektronik vorgesehen. Als Geräte können beispielsweise Funkgeräte, Card-PCs, Rechner, Elektronikgeräte etc. und/oder die Aufnahme eines Waffenbauteils für Maschinenpistolen oder Handfeuerwaffen vorgesehen sein. Vorteilhafterweise kann in dem Trägerelement ein auf den Einsatz unterschiedlichster Geräte abgestimmtes Lochbild für die Zu- bzw. Abführung von Kabeln für die jeweiligen Geräte und deren Versorgung vorgesehen sein. Dabei kann insbesondere der Waffenhalter eine wahlweise Option für Behörden sein, die Waffen einsetzen und sicher sowie verdeckt transportieren müssen. Das Waffenaufnahmeelement kann dabei zusätzlich zu einem Trägerelement für die Aufnahme der übrigen beschriebenen Geräte in die Mittelbox einsetzbar sein. Es ermöglicht die Aufnahme von Maschinenpistolen, Handfeuerwaffen und ähnlichem sowie für diese Waffen notwendiger Munition und Magazine. Die Erreichbarkeit der Waffen, die Sicherung durch das Schließsystem des Deckels und die schonende Lagerung der Waffen in der Box sind Vorteile, die die geschilderte Ausführungsform der vorliegenden Erfindung liefert.

Zusätzlich kann eine Abdeckung für im Stauraum der Mittelbox transportierte Geräte vorgesehen sein. Diese kann an der Oberschale befestigt werden und beispielsweise mit Ausschnitten für Belüftung und Bedienung, beispielsweise von PC, Funkgerät, DVD, etc. versehen sein. Durch diese Schutzabdeckung wird der Schutz eingebauter Geräte oder Waffen vervollständigt. Insbesondere teure Geräte, wie beispielsweise ein Laptop, werden so in der Mittelbox optimal geschützt.

Innerhalb des Stauraums kann zudem eine Aufnahmevorrichtung für elektrische und/oder elektronische Geräte und sonstige Gegenstände angeordnet sein. Insbesondere wenn elektrische oder elektronische Geräte, wie beispielsweise Navigationssysteme, Laptops, Videokameras oder ähnliches, eine permanente Stromversorgung oder eine Stromversorgung zum Aufladen eines in ihnen enthaltenen Akkus benötigen, kann zudem eine Aufladevorrichtung für diese Geräte in der Mittelbox selbst vorgesehen sein. Dabei ist es besonders vorteilhaft, wenn zudem ein Trägerelement vorgesehen ist, durch das die elektrischen und/oder elektronischen Geräte bereits so abgestützt und in dem Stauraum geführt werden, dass sie automatisch auf dafür vorgesehene Stecker oder Buchsen der Aufladevorrichtung geführt werden. Damit ist eine Fehlbedienung, die beispielsweise ein Abbrechen der Stecker zur Folge haben könnte, ausgeschlossen.

Die Mittelbox verfügt über einen Kabelkanal zum Einführen von Kabeln in die Mittelbox. Auf diese Weise muss nicht mehr eine komplizierte Kabelführung im auszurüstenden Kraftfahrzeug vorgenommen werden, um die verschiedenen Bedienelemente, die beispielsweise eine Strom- oder Datenkabelverbindung benötigen, mit eben diesen Verbindungen auszurüsten. Stattdessen findet eine zentrale Versorgung mit allen benötigten Kabeln durch den vorteilhafterweise einen Kabelkanal statt. Natürlich sind auch Mittelboxen mit mehr als einer Kabelzuführung denkbar, wodurch jedoch die Kabelführung wieder etwas verkompliziert wird. Die Oberschale weist wenigstens eine, vorteilhafterweise drei oder vier DIN-Schächte zur Aufnahme von Bediengeräten auf. Diese sind beispielsweise mit einer lösbaren Blende verschlossen. Innerhalb der Mittelbox ist somit zum einen die sichere Befestigung und Anordnung der Bediengeräte gewährleistet, zum anderen wird die Be- und Entlüftung ebenfalls sichergestellt. Dabei kann insbesondere Wärme, die in elektrischen und/oder elektronischen Geräten entsteht, sicher abgeführt und kühlere frische Luft zugeführt werden. Auch die Versorgung von Lautsprechern kann innerhalb dieses Teils der Mittelbox erfolgen.

Die Oberschale kann einstückig ausgebildet werden und sowohl die Aufnahmeeinrichtungen als auch die Öffnung zum Stauraum aufweisen. Alternativ kann die Oberschale auch aus verschiedenen zusammengefügten Bauteilen bestehen, wobei es sich als vorteilhaft erwiesen hat, wenn beispielsweise ein Teil der Oberschale die Aufnahmeeinrichtungen für die Bediengeräte aufweist. Dieses Bauteil kann dann separat mit einem weiteren Teil zur Oberschale verbunden werden, wodurch die Flexibilität erhöht und die zur Verfügung stehenden Einsatzoptionen und die Erreichbarkeit der in den Aufnahmeeinrichtungen angeordneten Geräte weiter verbessert werden kann.

In einer beispielhaften Ausgestaltung ist ein Deckel einer Öffnung zum Stauraum eben und beispielsweise gepolstert ausgebildet, um als Armlehne zu dienen. Dabei ist die Mittelbox so ausgebildet, dass der Teil der Oberschale, der die wenigstens eine Aufnahmeeinrichtung zur Aufnahme wenigstens eines Bediengerätes aufweist, in Fahrtrichtung des Kraftfahrzeuges vorne angeordnet ist. Die Bedienfelder der in diesen Aufnahmeeinrichtungen angeordneten Bediengeräte können dabei leicht geneigt angeordnet sein, um eine bessere Handhabbarkeit, Einsehbarkeit und Erreichbarkeit für den Fahrer bzw. den Beifahrer des Kraftfahrzeuges zu erreichen. Dadurch, dass die Mittelbox genau zwischen Fahrer- und Beifahrersitz angeordnet wird, muss auch nicht unterschieden werden, ob der Fahrer oder der Beifahrer das Gerät erreichen muss. Auch dadurch wird die Flexibilität erhöht und die Anzahl der möglichen Einsatzoptionen vergrößert.

Im Stauraum können die darin aufgenommenen Geräte und Gegenstände beispielsweise durch eine zusätzliche Abdeckung, die am Deckel oder an der Oberschale befestigbar ist, geschützt werden. Diese Abdeckung kann beispielsweise mit Ausschnitten für Belüftungen und Bedienungen versehen sein.

Mit einer Mittelbox gemäß einem Ausführungsbeispiel der vorliegenden Erfindung wird folglich ein Bauteil zur Aufnahme aller in einem Fahrzeug benötigten Geräte und Ausstattungsvarianten zur Verfügung gestellt. Insbesondere für Behörden und Sicherheitsorgane kann im Stauraum der Mittelbox ein Waffenhalter vorgesehen sein, in den Handfeuerwaffen eingesetzt werden können. Diese können auf diese Weise sicher und verdeckt transportiert werden, ohne dass die Erreichbarkeit im Ernstfall eingeschränkt wird. Dabei werden die Erreichbarkeit der Waffen, die Sicherung durch ein im Deckel vorhandenes Schließsystem und die schonende Lagerung durch das Trägerelement berücksichtigt.

In die Oberschale kann beispielsweise ein separates und variables Rahmenteil für eine Mehrzahl von Schächten vorgesehen sein. Beispielsweise können drei DIN-Schächte oder Schächte anderer nicht Normmaße vorgesehen sein. Diese können für den Einsatz von DIN-Geräten und Funkgerätmodulen, Radio, DVD-Geräten oder ähnlichem sowie für die Bedienung derartiger oder anderer Geräte notwendiger Druck-, Dreh- und Kippschalter, Poti, Taster oder sonstige Bedienhebel vorgesehen sein. Ein derartiges Rahmenteil kann separat auf der Oberschale befestigt werden und so die Vielzahl der Einsatzoptionen und die Erreichbarkeit von darin gelagerten Geräten erheblich verbessern.

Alternativ zur Deckelausgestaltung mit beispielsweise zwei Scharnieren, Gasdruckfeder zum leichteren Öffnen und Schließen und einem Schließsystem gemäß der Patentanmeldung DE 10 2010 011 775.7 kann auch ein verschraubter Deckelaufbau an der Oberschale vorgesehen sein. Der Deckel kann zusätzlich Hörerelemente und Druck-, Dreh- und Kippschalter, Poti, Taster oder sonstige Bedienhebel aufnehmen.

In einem erfindungsgemäßen Nutzfahrzeug ist die Mittelbox zwischen einem Fahrersitz und einem Beifahrersitz angeordnet. Sie ist vorzugsweise am Fahrzeugboden, dem Fahrersitz oder dem Beifahrersitz befestigt.

Mit Hilfe einer Zeichnung wird nachfolgend ein Ausführungsbeispiel der vorliegenden Erfindung näher erläutert. Es zeigt
- Figur 1 -: eine perspektivische Darstellung einer Mittelbox gemäß einem ersten Ausführungsbeispiel der vorliegenden Erfindung,
- Figur 2 -: eine Mittelbox in einer perspektivischen Darstellung gemäß einem zweiten Ausführungsbeispiel der vorliegenden Erfindung mit geöffnetem Deckel und
- Figur 3 -: eine Mittelbox gemäß einem dritten Ausführungsbeispiel der vorliegenden Erfindung in einer Explosionsdarstellung.

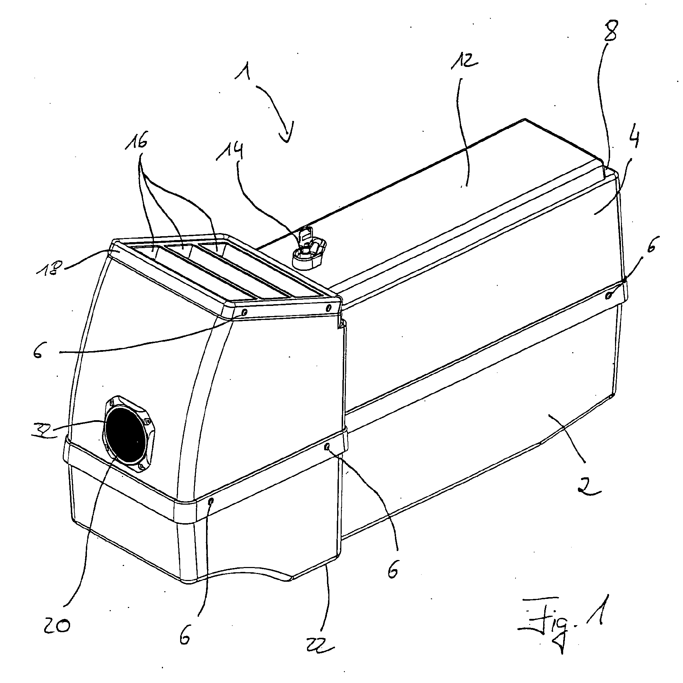

Figur 1 zeigt eine Mittelbox 1 gemäß einem ersten Ausführungsbeispiel der vorliegenden Erfindung. Die Mittelbox 1 weist eine Unterschale 2 auf, die beispielsweise zum Befestigen an einem Fahrzeugboden ausgebildet ist. An der Unterschale 2 ist eine Oberschale 4 angeordnet, die gemeinsam mit der Unterschale 2 einen Stauraum bildet. Die Oberschale 4 ist im in Figur 1 gezeigten Ausführungsbeispiel über Schrauben 6 an der Unterschale 2 befestigt. Es ist jedoch beispielsweise eine Befestigung durch Nieten denkbar.

An einer der Unterschale 2 abgewandten Seite 8 weist die Oberschale 6 eine Öffnung 10 auf, die im in Figur 1 gezeigten Ausführungsbeispiel durch einen Deckel 12 abgedeckt ist. Über ein Schloss 14 ist der Deckel 12 der Oberschale 4 abschließbar, so dass der Stauraum, der aus Oberschale 4 und Unterschale 2 gebildet wird, vor unberechtigtem Zugriff geschützt ist.

Die Oberschale 4 weist im in Figur 1 gezeigten Ausführungsbeispiel an der der Unterschale 2 abgewandten Seite 8 zudem drei Schächte 16 auf, die jeweils zur Aufnahme eines Bediengerätes, beispielsweise eines Funkgerätes, geeignet sind. Die Schächte 16 sind in einem Rahmen 18 angeordnet, der über **Schrauben 6 an der Oberschale 4 angeordnet ist.**

An einer Seite weist die Oberschale 4 eine Lüftungsöffnung 20 auf, die beispielsweise mit einem Filterelement 32 versehen sein kann und durch die die Be- und Entlüftung des Stauraums, der durch die Unterschale 2 und die Oberschale 4 gebildet wird, erfolgt.

Eine in Figur 1 gezeigte Mittelbox 1 kann beispielsweise zwischen Fahrersitz und Beifahrersitz eines Kraftfahrzeuges am Kraftfahrzeugboden angeordnet werden. Dabei weist der in Figur 1 linke Teil der Mittelbox in Fahrtrichtung des Fahrzeugs nach vorne. Man erkennt, dass dieser Teil, in dem sich die Schächte 16 befinden, breiter ausgebildet ist, als der in Figur 1 rechte Teil der Mittelbox 1, in dem sich der Deckel 12 befindet, der die in Figur 1 nicht gezeigte Öffnung 10 abdeckt. Damit wird das für Bediengeräte zur Verfügung stehende Platzangebot maximiert und insbesondere die mögliche Anzahl von Schächten 16 erhöht. Zwischen dem Fahrersitz und dem Beifahrersitz eines Kraftfahrzeuges ist in der Regel das Platzangebot beschränkt. Die Breite des in Figur 1 rechts liegenden hinteren Teils der Mittelbox 1 ist an diesen zur Verfügung stehenden Platz angepasst. Insbesondere können die Maße der Mittelbox 1 an den Fahrzeugtyp, in dem die Mittelbox 1 zum Einsatz kommen soll, angepasst werden.

Der in Figur 1 linke Teil der Mittelbox 1 erstreckt sich dagegen vorteilhafterweise so weit in Fahrtrichtung des Fahrzeugs nach vorne, dass er nach vorne zwischen dem Fahrersitz und dem Beifahrersitz hervorragt. Dadurch steht hier mehr Platz zur Verfügung, so dass eine größere Breite gewählt werden kann.

Man erkennt in Figur 1, dass eine Unterseite 22 der Unterschale 2 insbesondere im in Figur 1 linken Teil der Mittelbox 1 eine besondere Formgebung aufweist, die an die Form des Fahrzeugbodens, an dem die Mittelbox 1 befestigt werden soll, angepasst ist. So kann eine möglichst gute Befestigung der Mittelbox 1 am Fahrzeugboden gewährleistet werden.

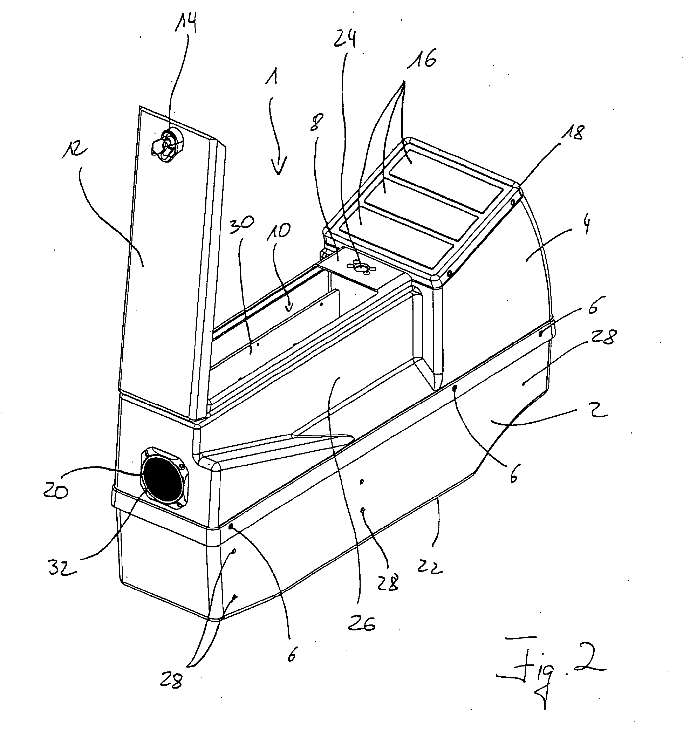

Figur 2 zeigt eine Mittelbox 1 gemäß einem zweiten Ausführungsbeispiel der vorliegenden Erfindung. Auch diese verfügt über eine Unterschale 2, an deren Oberseite die Oberschale 4 über Schrauben 6 angeordnet ist. In einer der Unterschale 2 abgewandten Seite 8 der Oberschale 4 befindet sich eine Öffnung 10, die einen Zugang zum Stauraum ermöglicht, der aus der Unterschale 2 und der Oberschale 4 gebildet wird. Die Öffnung 10 ist im in Figur 2 gezeigten Ausführungsbeispiel mit einem Deckel 12 verschließbar, der jedoch in geöffnetem Zustand gezeigt ist. Auch dieser Deckel 12 ist, wie der in Figur 1 gezeigte Deckel 12, mit einem Schloss 14 verschließbar. Der Schließbolzen des Schlosses greift dabei in eine in der der Unterschale 2 abgewandten Seite 8 der Oberschale 4 dafür vorgesehene Schließausnehmung 24 ein.

An der in Figur 2 linken Seite der Oberschale 4, die sich im eingebauten Zustand der Mittelbox 1 im Fahrzeug nach hinten gerichtet befindet, befindet sich eine Lüftungsöffnung 20, die mit einem Filterelement 32 versehen sein kann und durch die die Be- und Entlüftung des Stauraums der Mittelbox 1 erfolgt.

Man erkennt in Figur 2, dass eine Seitenfläche 26 der Oberschale 4, die im eingebauten Zustand der Mittelbox 1 zum Beifahrersitz des Kraftfahrzeugs gerichtet ist, so geformt ist, dass sie den zwischen dem Fahrersitz und dem Beifahrersitz des Kraftfahrzeugs zur Verfügung stehenden Raum optimal ausnutzt. Durch die spezielle Formgebung ist es insbesondere möglich, den am Beifahrersitz vorgesehenen Hebeln zur Verstellung des Beifahrersitzes Platz zu geben. Die konkrete Ausgestaltung der Seitenfläche 26 ist dabei naturgemäß vom Kraftfahrzeugtyp, in dem die Mittelbox 1 Verwendung finden soll, abhängig, da die jeweilige konkrete Ausgestaltung des zwischen dem Fahrersitz und dem Beifahrersitz zur Verfügung stehenden Raumes von Fahrzeugtyp zu Fahrzeugtyp variiert.

Man erkennt, dass an einer Seitenfläche der Unterschale 2 Bohrungen 28 vorgesehen sind, durch die Befestigungsmittel geführt werden können, sofern die Mittelbox 1 beispielsweise am Beifahrersitz eines Kraftfahrzeuges angeordnet werden soll. Natürlich ist es auch möglich, derartige Bohrungen 28 auf der gegenüberliegenden Seite der Mittelbox 1 anzuordnen und so die Mittelbox 1 am Fahrersitz des Kraftfahrzeugs zu befestigen.

Im Inneren des Stauraums der Mittelbox 1, der durch die Unterschale 2 und die Oberschale 4 gebildet wird, ist in Figur 2 ein Teil eines Trägerelementes 30 zu erkennen. Dieses dient zur Aufnahme von in der Mittelbox 1 zu transportierenden Gegenständen und kann an den jeweiligen konkreten Gegenstand angepasst sein.

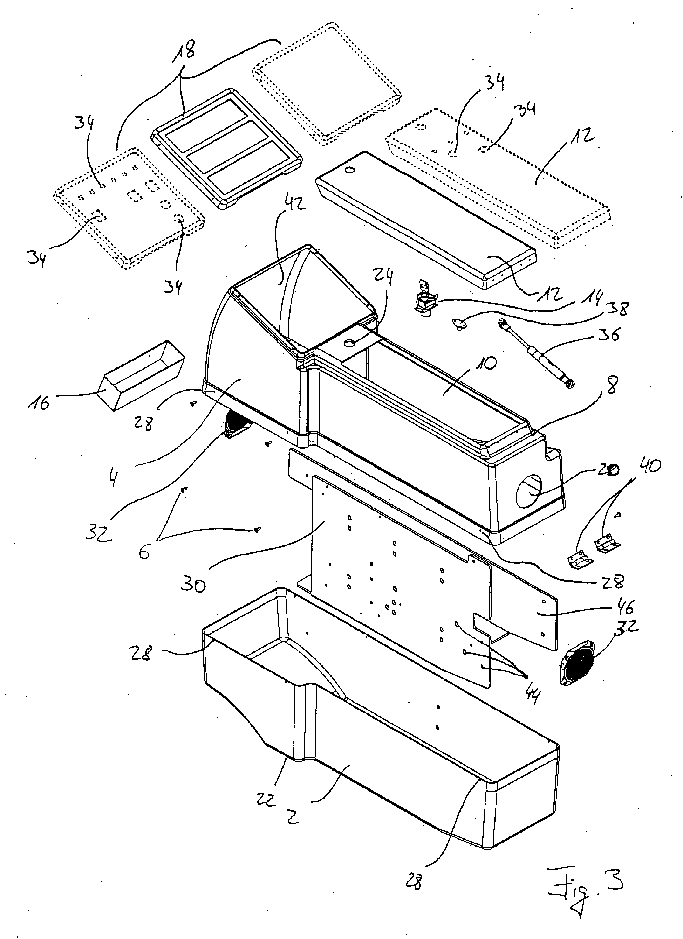

Figur 3 zeigt eine Ausgestaltung einer Mittelbox 1 gemäß einem Ausführungsbeispiel der vorliegenden Erfindung in einer Explosionsdarstellung. Man erkennt eine Unterschale 2, eine Oberschale 4 und die zur Befestigung der beiden aneinander verwendeten Schrauben 6. Für die Schrauben 6 sind sowohl in der Oberschale 4 als auch in der Unterschale 2 Bohrungen 28 vorgesehen, um die Unterschale 2 leicht mit der Oberschale 4 verbinden zu können.

In einer der Unterschale 2 abgewandten Seite 8 weist die Oberschale 4 eine Öffnung 10 auf, durch die ein Zugriff auf den Stauraum der Mittelbox 1 möglich ist. Die Öffnung 10 kann dabei durch einen Deckel 12 verschließbar sein. In Figur 3 sind zwei unterschiedliche Ausgestaltungen eines Deckels 12 gezeigt. Mit durchgezogenen Linien ist ein Deckel 12 dargestellt, wie er auch in den Figuren 1 und 2 gezeigt ist. Mit gestrichelten Linien ist dagegen ein Deckel 12 dargestellt, der über zusätzliche Ausnehmungen 34 verfügt, die in einer Oberseite des Deckels 12 vorgesehen sind. Hier können beispielsweise Taster, Druck-, Dreh- und Kippschalter, Bedienhebel und ähnliches für weitere in der Mittelbox 1 aufzunehmende Geräte vorgesehen sein. Es können auch Hörerelemente von Funkgeräten oder anderen Kommunikationseinrichtungen am Deckel 12 befestigt werden. Für beide Ausführungsformen des Deckels 12 kann ein Schloss 14 vorgesehen sein, mit dem der Deckel abschließbar ist. Dabei greift der Schließbolzen des Schlosses 14 in eine dafür in der der Unterseite abgewandten Seite 8 der Oberschale 4 vorgesehene Schließausnehmung 24 ein. Um ein Öffnen und Schließen des Deckels 12 zu vereinfachen und abzufedern, kann ein Gasdruckdämpfer 36 vorgesehen sein, der über ein Kugelgelenk 38 am Deckel 12 festgelegt ist. Mit dem anderen Ende wird der Gasdruckdämpfer 36 an der Oberschale 4 befestigt. Der Deckel 12 ist über Scharniere 40 an der Oberschale 4 der Mittelbox 1 schwenkbar gelagert.

Die Oberschale 4 weist im in Figur 3 gezeigten Ausführungsbeispiel zwei Lüftungsöffnungen 20 auf, die jeweils mit einem Filterelement 32 versehen sind. Durch diese Lüftungsöffnungen 20 findet die Be- bzw. Entlüftung des Stauraums in der Mittelbox 1 statt.

Die Oberschale 4 verfügt in der der Unterschale 2 abgewandten Seite 8 über eine zusätzliche Schachtausnehmung 42, in die die Schächte 16, von denen Figur 3 lediglich einer gezeigt ist, einsetzbar sind. Der Schacht 16 wird dabei in einen Rahmen 18 eingesetzt, von dem in Figur 3 drei unterschiedliche Ausgestaltungen gezeigt sind. Mit durchgezogenen Linien ist ein Rahmen 18 gezeigt, in den drei Schächte 16 eingesetzt werden können. Dabei ist eine Seite des in einen Schacht 16 einzusetzenden Gerätes für den Fahrer oder den Beifahrer des Kraftfahrzeuges, in das die Mittelbox 1 eingesetzt werden soll, zugänglich.

In Figur 3 rechts von diesem durchgezogen gezeichneten Rahmen 18 ist ein gestrichelt gezeichneter Rahmen 18 gezeigt, der nur über eine große Ausnehmung verfügt. Alternativ dazu kann auch ein teilweise geschlossener Rahmen vorgesehen sein, in denen beispielsweise ein oder zwei Schächte 16 einsetzbar sind, so dass eine Seite, auf der sich beispielsweise Bedienelemente, wie Schalter oder Taster befinden, des in einen Schacht 16 einzusetzenden Gerätes für die Insassen des Kraftfahrzeugs zugänglich ist. Es ist jedoch auch möglich, Bediengeräte in einen Schacht 16 einzusetzen, von denen keine Seite für die Insassen des Kraftfahrzeugs zugänglich sein muss. Dies kann beispielsweise ein Funkgerät sein, bei dem alle Bedienelemente in einem separaten Hörerelement vorhanden sind. Dieses ist beispielsweise am Deckel 12 der Mittelbox 1 befestigbar. Für diese Fälle kann es aus ästhetischen Gesichtspunkten sinnvoll sein, die in die Schächte 16 eingesetzten Bediengeräte abzudecken und so eine homogene und optisch ansprechende Oberfläche zu schaffen. Dazu können beispielsweise auch lösbare Blenden verwendet werden. Diese sind auch in nicht besetzte Schächte 16 einsetzbar, so dass die Mittelbox 1 ein optisch ansprechendes Gesamtbild abgibt. Zudem wird durch eine Abdeckung momentan nicht verwendeter Schächte 16 eine Verschmutzung des Innenraums und daher insbesondere des Stauraums der Mittelbox 1 verhindert.

Links von dem durchgezogen gezeichneten Rahmen 18 ist in Figur 3 ein weiterer gestrichelt gezeichneter Rahmen 18 gezeigt, der Ausnehmungen 34 aufweist, durch die einzelne Bedienelement an einem Bediengerät, das in einem der Schächte 16 eingesetzt wird, für die Insassen des Kraftfahrzeugs zugänglich sind. Dies können beispielsweise Schalter, Knöpfe oder ähnliche Elemente sein, durch die einzelne Funktionen eingesetzter Bediengeräte gesteuert werden können. Ein derartiger Rahmen 18 ist vorzugsweise an das jeweilige Bediengerät angepasst, um an genau den für das Bediengerät richtigen Stellen die Ausnehmungen 34 aufzuweisen.

Figur 3 zeigt zudem ein Trägerelement 30. Dieses verfügt über ein Lochbild 44, das an in der Mittelbox 1 aufzunehmende Geräte angepasst sein kann. Durch die verschiedenen Löcher des Lochbilds 44 können Kabel für eine elektrische oder elektronische Versorgung in der Mittelbox 1 zu transportierender Geräte gezogen werden. Zudem können auch Befestigungselemente aufgenommen werden, um zusätzliche Halterungen 46 oder die zu transportierenden Geräte direkt im Stauraum der Mittelbox 1 festzulegen. Insbesondere wenn weitere Halterungen 46 angeordnet werden, können diese auf die zu transportierenden Gegenstände abgestimmt und angepasst sein. Damit wird eine Bewegung gegebenenfalls teurer in der Mittelbox 1 zu transportierender Gegenstände während der Fahrt vermieden und ein Klappergeräusch verhindert. Es können auch multifunktionale Halterungen 46 beispielsweise für PCs, Card-PCs oder Laptops vorgesehen sein, über die die entsprechenden elektrischen oder elektronischen Geräte gleichzeitig aufgeladen und mit Strom versorgt werden können. Zudem sind Halterungen 46 für Unterlagenmappen oder zur Aufnahme von Waffensystemen, insbesondere von Handfeuerwaffen, denkbar.

### Bezugszeichenliste

- 1: Mittelbox
- 2: Unterschale
- 4: Oberschale
- 6: Schraube
- 8: abgewandte Seite
- 10: Öffnung
- 12: Deckel
- 14: Schloss
- 16: Schacht
- 18: Rahmen
- 20: Lüftungsöffnung
- 22: Unterseite
- 24: Schließausnehmung
- 26: Seitenfläche
- 28: Bohrung
- 30: Trägerelement
- 32: Filterelement
- 34: Ausnehmung
- 36: Gasdruckdämpfer
- 38: Kugelgelenk
- 40: Scharnier
- 42: Schachtausnehmung
- 44: Lochbild
- 46: Halterung

## Patentansprüche

1. Mittelbox (1) zum Anordnen zwischen einem Fahrersitz und einem Beifahrersitz eines Nutzfahrzeugs mit einer Unterschale (2) zum Befestigen an einem Fahrzeugboden, dem Fahrersitz oder dem Beifahrersitz und einer an der Unterschale (2) angeordneten Oberschale (4), wobei die Unterschale (2) und die Oberschale (4) gemeinsam einen Stauraum zum Aufnehmen von Gegenständen, beispielsweise einem Laptop, umschließen, wobei die Oberschale (4) an einer der Unterschale (2) abgewandten Seite (8) wenigstens eine Öffnung (10) zum Stauraum und wenigstens einen Schacht (16) zur Aufnahme wenigstens eines Bediengerätes aufweist.

2. Mittelbox (1) nach Anspruch 1, **dadurch gekennzeichnet, dass** die Oberschale (4) und die Unterschale (2) mittels Nieten oder Schrauben (6) aneinander befestigt sind.

3. Mittelbox (1) nach einem der vorstehenden Ansprüche, **dadurch gekennzeichnet, dass** die Öffnung (10) zum Stauraum mit einem Deckel (12) verschließbar ist.

4. Mittelbox (1) nach Anspruch 3, **dadurch gekennzeichnet, dass** wenigstens ein Gasdruckdämpfer (36) zwischen dem Deckel (12) und der Oberschale (4) angeordnet ist.

5. Mittelbox (1) nach einem der vorstehenden Ansprüche, **dadurch gekennzeichnet, dass** im Stauraum ein Trägerelement (30) zum Abstützen in dem Stauraum zu verstauender Gegenstände angeordnet ist.

6. Mittelbox (1) nach Anspruch 5, **dadurch gekennzeichnet, dass** das Trägerelement (30) einstückig mit der Unterschale (2) ausgebildet ist.

7. Mittelbox (1) nach Anspruch 5 oder 6, **dadurch gekennzeichnet, dass** das Trägerelement (30) ein Lochbild (44) aufweist.

8. Mittelbox (1) nach einem der vorstehenden Ansprüche, **dadurch gekennzeichnet, dass** im Stauraum eine Aufnahmevorrichtung für elektrische und/oder elektronische Geräte und sonstige Gegenstände angeordnet ist.

9. Mittelbox (1) nach einem der vorstehenden Ansprüche, **gekennzeichnet durch** einen Kabelkanal zum Einführen von Kabeln in die Mittelbox (1).

10. Mittelbox (1) nach einem der vorstehenden Ansprüche, **dadurch gekennzeichnet, dass** der wenigstens eine Schacht (16) mit einer lösbaren Blende verschlossen ist.

11. Nutzfahrzeug mit einer Mittelbox (1) nach einem der vorstehenden Ansprüche, die zwischen einem Fahrersitz und einem Beifahrersitz des Nutzfahrzeugs angeordnet ist.

12. Nutzfahrzeug nach Anspruch 11, **dadurch gekennzeichnet, dass** die Mittelbox (1) an einem Fahrzeugboden oder dem Fahrersitz oder dem Beifahrersitz befestigt ist.
